# EUROPÄISCHE PATENTSCHRIFT

(11) **EP 4 239 133 B1**
(45) Veröffentlichungstag und Bekanntmachung des Hinweises auf die Patenterteilung: **13.08.2025**
(21) Anmeldenummer: 23158800.5
(22) Anmeldetag: 27.02.2023
(51) Int. Cl.: E03B 7/04, E03C 1/04, E03C 1/044

(54) **VORRICHTUNG ZUR BEREITSTELLUNG EINES FLUIDS UND SANITÄRARMATURSYSTEM**
DEVICE FOR PROVIDING A FLUID AND SANITARY FITTING SYSTEM
DISPOSITIF DE FOURNITURE DE FLUIDE ET SYSTÈME DE ROBINETTERIE SANITAIRE

(30) Priorität: 02.03.2022 DE 102022202151
(43) Veröffentlichungstag der Anmeldung: 06.09.2023
(73) Patentinhaber: BLANCO GmbH + Co KG, 75038 Oberderdingen (DE)
(72) Erfinder: Krebs, Michael, 67133 Maxdorf (DE); Zöllner, Thomas, 42369 Wuppertal (DE)
(74) Vertreter: Ullrich & Naumann PartG mbB

(56) Entgegenhaltungen:
- WO-A1-2020/198896
- DE-A1- 102014 004 559
- US-A1- 2007 246 550

## Beschreibung

Die Erfindung betrifft eine Vorrichtung zur Bereitstellung eines Fluids, insbesondere von Wasser, umfassend eine zentrale Warmfluidbereitstellungseinrichtung, vorzugsweise umfassend eine Zentralheizung, zur Bereitstellung von Warmfluid, eine Kaltfluidbereitstellungseinrichtung zur Bereitstellung von Kaltfluid, und eine lokale Heißfluidbereitstellungseinrichtung.

Die Erfindung betrifft weiter ein Verfahren zur Bereitstellung eines Fluids, insbesondere von Wasser, umfassend die Schritte:
- Bereitstellen von Warmfluid mittels einer zentralen Warmfluidbereitstellungseinrichtung, vorzugsweise umfassend eine Zentralheizung,
- Bereitstellen von Kaltfluid mittels einer Kaltfluidbereitstellungseinrichtung zur Bereitstellung von Kaltfluid, und
- Bereitstellen von Heißfluid mittels einer lokalen Heißfluidbereitstellungseinrichtung.

Die Erfindung betrifft darüber hinaus ein Sanitärarmatursystem, umfassend eine Vorrichtung zur Bereitstellung eines Fluids und eine Sanitärarmatur, die mit der Vorrichtung zur Bereitstellung des Fluids fluidisch verbunden ist.

Obwohl allgemein auf beliebige Vorrichtungen zur Bereitstellung eines Fluids anwendbar, wird die vorliegende Erfindung in Bezug auf eine Sanitärarmatur als Vorrichtung zur Bereitstellung eines Fluids erläutert.

Obwohl allgemein auf beliebige Fluide anwendbar, wird die vorliegende Erfindung in Bezug auf Wasser als Fluid erläutert.

Sanitärarmaturen sind in vielfältigster Weise bekannt geworden. Bekannte Sanitärarmaturen weisen beispielsweise einen Armaturenkörper mit zumindest einem Stellglied zur Einstellung zumindest einer Eigenschaft eines durch die Sanitärarmatur geleiteten Fluidstroms auf. Bei der Eigenschaft kann es sich beispielsweise um die Durchflussmenge des Fluidstroms oder die Temperatur des Fluidstroms handeln. Bei bekannten Sanitärarmaturen wird der Fluidstrom beispielsweise aus einem getrennten Kaltwasser- und Warmwasserstrom mittels einer Mischeinrichtung gemischt und von dort zu einem Auslauf geleitet.

Zur Erhöhung der Funktionalität ist beispielsweise aus der DE 10 2013 000 773 A1 oder der DE 10 2013 002 236 A1 eine Sanitärarmatur bekannt geworden mit zumindest einem ersten Betätigungselement zur Temperatur- und/oder Mengeneinstellung von Mischwasser und mit zumindest einem zweiten Betätigungselement zur Mengeneinstellung von Heißwasser. Üblicherweise wird dabei Mischwasser aus Warm- und Kaltwasser bereitgestellt, wobei das Warmwasser von einer zentralen Warmwasserquelle, beispielsweise einer Zentralheizung, bereitgestellt wird. Heißwasser wird üblicherweise nicht über die zentrale Warmwasserquelle bereitgestellt, sondern über einen Boiler, der Heißwasser mit Temperaturen oberhalb von 60 Grad Celsius bereitstellen kann.

Da die zentrale Warmwasserquelle regelmäßig weit von der jeweiligen Sanitärarmatur beabstandet ist, erkaltet das von der zentralen Warmwasserquelle bereitgestellte Warmwasser auf Grund der Leitungslänge, beispielsweise beträgt diese teilweise mehr als 10 m, bis zur Ausgabestelle, der Sanitärarmatur, nicht unwesentlich. Wird nach längerer Zeit nun Warmwasser gezapft, wird zunächst lediglich erkaltetes Wasser ausgegeben, bis auf Grund der Leitungslänge neues Warmwasser durch die komplette Leitung bis zum Auslass nachgeführt wird.

Nachteilig dabei ist, dass damit das kalte Wasser ungenutzt verschwendet wird. Darüber hinaus muss zur Erwärmung von kaltem Wasser zur Bereitstellung von Warmwasser üblicherweise die zentrale Warmwasserquelle zunächst selbst erwärmt werden, was einen hohen Energiebedarf erfordert, selbst wenn lediglich kleine Warmwassermengen gezapft werden.

Um die Menge an ungenutztem Wasser zu reduzieren, ist es beispielsweise aus der DE 10 2014 004 559 A1 bekannt geworden, entlang der Warmwasserleitung einen Zwischenerhitzer vorzusehen. Aus der DE 10 2015 000 015 A1 ist ein Verfahren zur Bereitstellung von Mischwasser bekannt geworden, bei dem der Fluidstrom, wenn dieser eine bestimmte Temperatur unterschreitet, zu einem Speicher zurückgeleitet wird.

Nachteilig dabei ist die aufwendige Konstruktion, insbesondere durch eine zusätzliche Heizeinrichtung und durch zusätzliche Leitungen, und die aufwendige aber unflexible Steuerung.

Eine Aufgabe der vorliegenden Erfindung ist es daher, eine Vorrichtung zur Bereitstellung eines Fluids und ein Sanitärarmatursystem bereitzustellen, welche einen reduzierten Fluid- und Energieverbrauch aufweisen und hierbei gleichzeitig eine hohe Flexibilität ermöglichen.

Eine weitere Aufgabe der vorliegenden Erfindung ist es, ein Verfahren zur Bereitstellung eines Fluids zur Verfügung zu stellen, welches einen reduzierten Fluid- und Energieverbrauch aufweist und hierbei ebenso eine gleichzeitig hohe Flexibilität ermöglicht.

Eine weitere Aufgabe der vorliegenden Erfindung ist es, eine alternative Vorrichtung zur Bereitstellung eines Fluids, ein alternatives Sanitärarmatursystem sowie ein alternatives Verfahren zur Bereitstellung eines Fluids bereitzustellen.

Die vorliegende Erfindung löst die vorstehend genannten Aufgaben bei einer Vorrichtung zur Bereitstellung eines Fluids, insbesondere von Wasser, umfassend
eine zentrale Warmfluidbereitstellungseinrichtung, vorzugsweise umfassend eine Zentralheizung, zur Bereitstellung von Warmfluid,
eine Kaltfluidbereitstellungseinrichtung zur Bereitstellung von Kaltfluid,
eine lokale Heißfluidbereitstellungseinrichtung,
dadurch, dass
eine Steuereinrichtung angeordnet ist, die zur Steuerung der Einrichtungen ausgebildet ist, derart, dass unterhalb einer Warmfluidausgabemenge und/oder unterhalb einer Temperatur an zumindest einer Stelle einer Warmfluidzuführleitung von der Warmfluidbereitstellungseinrichtung zu einem Auslass, das Warmfluid durch Zumischen von Heißfluid bereitgestellt wird, und oberhalb der vorgebbaren Warmfluidzapfmenge und/oder Temperatur an zumindest einer Stelle einer Warmfluidzuführleitung, das Warmfluid durch die zentrale Warmfluidbereitstellungseinrichtung bereitgestellt wird.

Die vorliegende Erfindung löst die vorstehend genannten Aufgaben bei einem Verfahren zur Bereitstellung eines Fluids, insbesondere von Wasser, umfassend die Schritte:
- Bereitstellen von Warmfluid mittels einer zentralen Warmfluidbereitstellungseinrichtung, vorzugsweise umfassend eine Zentralheizung,
- Bereitstellen von Kaltfluid mittels einer Kaltfluidbereitstellungseinrichtung zur Bereitstellung von Kaltfluid,
- Bereitstellen von Heißfluid mittels einer lokalen Heißfluidbereitstellungseinrichtung,
dadurch, dass
unterhalb einer vorgebbaren Warmfluidausgabemenge und/oder unterhalb einer Temperatur an zumindest einer Stelle einer Warmfluidzuführleitung von der Warmfluidbereitstellungseinrichtung zu einem Auslass, das Warmfluid durch Zumischen von Heißfluid bereitgestellt wird, und oberhalb der vorgebbaren Warmfluidausgabemenge und/oder Temperatur an zumindest einer Stelle einer Warmfluidzuführleitung, das Warmfluid durch die zentrale Warmfluidbereitstellungseinrichtung bereitgestellt wird.

Die vorliegende Erfindung löst die vorstehend genannten Aufgaben ebenfalls mit einem Sanitärarmatursystem, umfassend eine Vorrichtung zur Bereitstellung eines Fluids gemäß einem der Ansprüche 1-7, und eine Sanitärarmatur, die mit der Vorrichtung zur Bereitstellung des Fluids fluidisch verbunden ist.

Der Begriff "Sanitär" ist im weitesten Sinne zu verstehen und bezieht sich, insbesondere in den Ansprüchen, vorzugsweise in der Beschreibung, allgemein auf den Küchenbereich, den Bad- oder Waschküchenbereich sowie den Heizungsbereich.

Der Begriff "Fluid" ist im weitesten Sinne zu verstehen und bezieht sich, insbesondere in den Ansprüchen, vorzugsweise in der Beschreibung, allgemein auf eine oder mehrere Flüssigkeiten, ein oder mehrere Gase und deren Mischung, insbesondere von in einer Flüssigkeit gelösten Gasen.

Der Begriff "zentral" in Bezug auf eine Warmfluidbereitstellungseinrichtung ist im weitesten Sinne zu verstehen und bezieht sich, insbesondere in den Ansprüchen, vorzugsweise in der Beschreibung, allgemein auf eine in einem Haus, beispielsweise einem Einfamilienhaus, zentral angeordnete Warmfluidbereitstellungseinrichtung wie eine Zentralheizung, einen zentralen Warmwasserspeicher oder auf einen Umlaufwasserheizer, auch Kombitherme genannt, für eine Wohnung oder dergleichen, die insbesondere Warmwasser an eine Mehrzahl unterschiedlichster Ausgabestellen innerhalb des Hauses oder innerhalb einer Wohnung bereitstellt.

Der Begriff "lokal" in Bezug auf eine Heißfluidbereitstellungseinrichtung ist im weitesten Sinne zu verstehen und bezieht sich, insbesondere in den Ansprüchen, vorzugsweise in der Beschreibung, allgemein auf eine in einem Haus, beispielsweise einem Einfamilienhaus, lokal oder dezentral angeordnete Heißfluidbereitstellungseinrichtung wie einen Durchlauferhitzer, Boiler oder dergleichen, die insbesondere Heißwasser für lediglich eine direkt daran angeschlossene Ausgabestelle innerhalb des Hauses bereitstellt. Die Leitungslänge zwischen Heißfluidbereitstellungseinrichtung und Ausgabestelle beträgt dabei weniger als 5 m, vorzugsweise weniger als 2 m, insbesondere weniger als 1,5 m, vorzugsweise weniger als 1 m.

Einer der damit erzielten Vorteile ist, dass damit die Menge nicht ausreichend erwärmten Warmfluids, insbesondere Warmwasser erheblich reduziert wird. Darüber hinaus wird die Nutzerzufriedenheit verbessert, denn ausreichend warmes Fluid steht fast unmittelbar nach der Ausgabe von Warmfluid zur Verfügung. Darüber hinaus ist ein Vorteil, dass der Energiebedarf reduziert wird, da im Falle kleinerer Ausgabemengen eine zentrale Warmfluidbereitstellungseinrichtung nicht betätigt werden muss.

Weitere Merkmale, Vorteile und weitere Ausführungsformen der Erfindung sind im Folgenden beschrieben oder werden dadurch offenbar.

Gemäß einer vorteilhaften Weiterbildung der Erfindung ist mittels einer Einstelleinrichtung eine gewünschte Warmfluidmenge einstellbar, wobei die Steuereinrichtung ausgebildet ist, zu überprüfen, ob die gewünschte Warmfluidmenge größer oder kleiner als die vorgebbare Warmfluidausgabemenge ist. Vorteil hiervon ist, dass vorab eine bestimmte Zapfmenge an Fluid durch einen Benutzer eingestellt und später abgegeben werden kann. Auf besonders energieeffiziente Weise kann dann die Steuereinrichtung das Warmfluid entweder mittels der zentralen Warmfluidbereitstellungseinrichtung, wenn die Zapfmenge über der vorgebbaren Warmfluidausgabemenge liegt, ausgeben oder mittels Zumischen von Heißfluid, wenn diese darunterliegt.

Gemäß einer weiteren vorteilhaften Weiterbildung der Erfindung weist die Einstelleinrichtung ein mechanisches Bedienelement, ein optisches Erfassungselement und/ oder eine Funkschnittstelle zur Einstellung der gewünschten Warmfluidmenge auf. Vorteil hierbei ist eine einfache und flexible Einstellung der gewünschten Warmfluidmenge durch einen Nutzer.

Gemäß einer weiteren vorteilhaften Weiterbildung der Erfindung weist die Steuereinrichtung und/oder die Einstelleinrichtung eine Recheneinrichtung auf, die anhand einer Zapfdauer, eines gemessenen Wertes eines Fluidvolumenstroms und/oder eines vorgebbaren Wertes des Fluidvolumenstroms eine Warmfluidausgabemenge berechnet. Vorteil hiervon ist, dass für einen Nutzer auf energieeffiziente Weise Warmfluid ausgegeben werden kann, ohne dass dieser vorab anhand einer Vorauswahl zunächst eine auszugebende Menge an Warmfluid auswählen muss.

Gemäß einer weiteren vorteilhaften Weiterbildung der Erfindung ist zumindest ein Temperatursensor zur Messung der Temperatur an zumindest einer Stelle stromabwärts der Warmfluidbereitstellungseinrichtung angeordnet. Vorteil hiervon ist, dass eine genaue Messung der Temperatur des in den Leitungen befindlichen Warmfluids ermöglicht wird, sodass auf effiziente Weise dann entsprechend dosierte Mengen Heißfluid zugemischt werden können.

Gemäß einer weiteren vorteilhaften Weiterbildung der Erfindung sind Warmfluidzuführleitung und Heißfluidzuführleitung über zumindest ein schaltbares Ventil miteinander verbindbar. Damit ist auf besonders einfache Weise ein geregeltes Zumischen von Heißfluid zu dem Warmfluid möglich.

Gemäß einer weiteren vorteilhaften Weiterbildung der Erfindung weist die Einstelleinrichtung eine Nutzerschnittstelle zur Betätigung der Heizung der Heißfluidbereitstellungseinrichtung auf. Damit wird bedarfsabhängig durch einen Nutzer erst dann Heißfluid durch die Heißfluidbereitstellungseinrichtung bereitgestellt, wenn dieses benötigt wird. Auf diese Weise wird unnötiges Aufheizen des Heißfluids und damit ein unnötiger Energieverbrauch vermieden.

Gemäß einer vorteilhaften Weiterbildung der Erfindung wird die vorgebbare Warmfluidausgabemenge mittels einer Nutzerschnittstelle eingestellt und es wird eine Ausgabe des Fluids initiiert. Einer der damit erzielten Vorteile ist, dass damit ein Nutzer auf flexible Weise eine von ihm gewünschte Warmfluidausgabemenge vorab auswählen kann.

Gemäß einer weiteren vorteilhaften Weiterbildung der Erfindung wird eine Heizeinrichtung für die Heißfluidbereitstellungseinrichtung mittels einer Nutzerschnittstelle betätigt. Damit wird bedarfsabhängig durch einen Nutzer erst dann Heißfluid durch die Heißfluidbereitstellungseinrichtung bereitgestellt, wenn dieses benötigt wird. Auf diese Weise wird unnötiges Aufheizen des Heißfluids vermieden.

Gemäß einer weiteren vorteilhaften Weiterbildung der Erfindung wird eine Warmfluidentnahmemenge anhand einer ermittelten Größe eines Volumenstroms des ausgegebenen Fluids und/oder von Vorgaben für den Volumenstrom und/oder anhand einer Entnahmedauer des ausgegebenen Fluids berechnet, diese mit der vorgebbaren Warmfluidausgabemenge verglichen und entsprechend dem Vergleich das Warmfluid ausgegeben. Einer der damit erzielten Vorteile ist, dass auf energieeffiziente Weise, ohne direkte Vorwahl der Warmfluidausgabemenge durch einen Nutzer, Warmfluid energieeffizient ausgegeben wird.

Weitere wichtige Merkmale und Vorteile der Erfindung ergeben sich aus den Unteransprüchen, aus der Zeichnung und aus der dazugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der vorliegenden Erfindung sind in der Zeichnung dargestellt und werden in der nachfolgenden Beschreibung näher erläutert, wobei sich gleiche Bezugszeichen auf gleiche oder ähnliche oder funktional gleiche Bauteile oder Elemente beziehen.

Dabei zeigt in schematischer Form
- Figur 1: ein Sanitärarmatursystem gemäß einer Ausführungsform der vorliegenden Erfindung; und
- Figur 2: Schritte eines Verfahrens gemäß einer Ausführungsform der vorliegenden Erfindung.

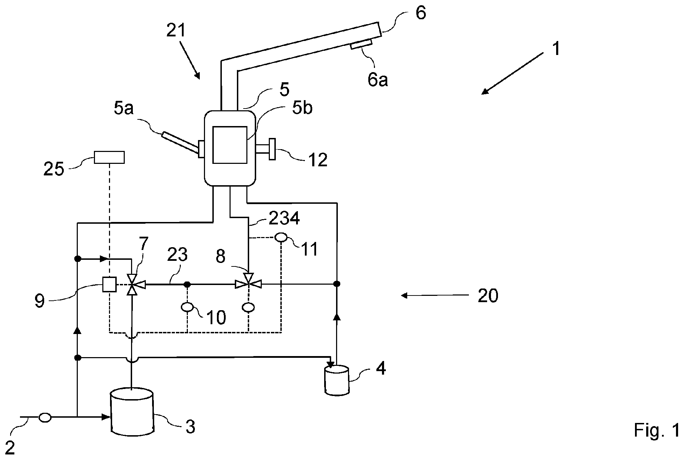

Figur 1 zeigt ein Sanitärarmatursystem gemäß einer Ausführungsform der vorliegenden Erfindung.

Im Detail zeigt Figur 1 ein Sanitärarmatursystem 1, welches eine Kaltwasserzuführleitung 2, eine Zentralheizung mit Warmwasserbereitstellung 3, einen Boiler 4 und eine Sanitärarmatur 21 zur Ausgabe von Kalt-, Warm- und Heißwasser aufweist. Hierbei weist die Sanitärarmatur 21 einen Grundkörper 5 mit einer Mischeinrichtung 5b auf, an dem ein Hebel 5a zur Einstellung der Durchflussmenge und zur Einstellung der Temperatur des auszugebenden Mischwassers anhand der Mischeinrichtung 5b angeordnet ist. Mischwasser kann dabei über einen an dem Grundkörper 5 angeordneten Auslauf 6 mit Auslass 6a an dessen einem Ende ausgegeben werden. Weiterhin umfasst die Sanitärarmatur 21 eine Aktivierungseinrichtung 12, insbesondere zur Initiierung der Ausgabe von Kleinstmengen von Warmwasser über den Auslauf 6. Die Aktivierungseinrichtung 12 kann dabei auch zur Einstellung einer Abgabemenge und/oder eines Gesamtvolumenstroms ausgebildet sein.

Zur Ausgabe von Mischwasser ist einerseits die Kaltwasserleitung 2 direkt mit der Mischeinrichtung 5 verbunden, andererseits mit der Zentralheizung mit Warmwasserbereitstellung 3 zur Erzeugung von Warmwasser aus dem Kaltwasser. Darüber hinaus ist die Kaltwasserleitung 2 ebenfalls mit dem lokal angeordneten Boiler 4 zur Erzeugung von Heißwasser aus dem Kaltwasser verbunden. Stromabwärts der Warmwasserbereitstellung 3 ist ein Mischventil 7 angeordnet, mit welchem Kaltwasser aus der Kaltwasserleitung 2 und Warmwasser aus der Warmwasserbereitstellung 3 in einer Leitung 23 gemischt bereitgestellt werden kann. Stromabwärts der Leitung 23 ist ein weiteres Mischventil 8 angeordnet, mit dem Mischwasser der Leitung 23 mit Heißwasser aus dem Boiler 4 in einer Leitung 234 bereitgestellt werden kann. Die Leitung 234 ist hierbei über die Mischeinrichtung 5 mit dem Auslass 6a verbunden. Der Boiler 4 ist zusätzlich ebenfalls direkt mit der Mischeinrichtung 5 verbunden.

Zwischen den beiden Mischventilen 7 und 8 ist ein Temperatursensor 10 zur Messung der Temperatur in der Leitung 23 angeordnet und in der Leitung 234 ist zwischen Mischventil 8 und Mischeinrichtung 5 ein weiterer Temperatursensor 11 angeordnet. Beide Mischventile 7, 8 und beide Temperatursensoren 10, 11 sind mit einer Steuereinrichtung 9 zu deren Steuerung verbunden. Diese Verbindung kann drahtgebunden, wie in Figur 1 gezeigt, oder drahtlos ausgebildet sein. Darüber hinaus kann die Steuereinrichtung 9 eine Konfigurationsschnittstelle (nicht gezeigt) aufweisen und/ oder eine Steuerschnittstelle zum Empfang von weiteren Steuersignalen 25, beispielsweise von Betätigungssignalen zur Schaltung der Ventile 7, 8 anhand der Aktivierungseinrichtung 12 oder dergleichen.

Im Einzelnen kann die Steuereinrichtung 9 hierbei die Temperatur in den Leitungen 23 und 234 messen und in Abhängigkeit der dort vorliegenden Temperaturen und der Warmwasserzapfmenge über den Auslass 6a die Ventile 7 und 8 entsprechend betätigen, sodass Warmwasser bei kleinen Zapfmengen als Mischung aus erkaltetem Warmwasser in den Leitungen 23 und 234 und Heißwasser aus dem Boiler 4 bereitgestellt wird. Dabei kann eine Freischaltung der Warmwasserleitung für größere Zapfmengen über eine explizite Freigabe beispielsweise durch einen Nutzer oder die explizite Verriegelung der Warmwasserleitung von der Warmwasserbereitstellung 3 mittels des Mischventils 7 erfolgen, oder im Falle kleiner Entnahmemengen durch die Aktivierungseinrichtung 12. Die Aktivierungseinrichtung 12 kann einen mechanischen Schalter/Taster, zum Beispiel an der Sanitärarmatur 21, aufweisen und/oder eine optische Erfassungseinrichtung, mittels derer Codes, zum Beispiel QR-Codes, an zu füllenden Behältnissen eingelesen werden können und/oder mittels derer eine optische Erfassung der Behältergröße, zum Beispiel mittels Tiefenmessung, erfolgen kann. Ebenso kann die Steuereinrichtung 9 mit weiteren Sensoren, beispielsweise Durchflusssensoren, die insbesondere in der Leitung 234 angeordnet sind und oder einer Uhr zur Messung der Entnahmedauer von Warmwasser über den Auslauf 6a verbunden sein. Die Steuereinrichtung 9 kann dann beispielsweise die Leitung 23 mittels des Ventils 7 wieder freigeben, wenn eine Überschreitung einer für die Kleinentnahme vorgegebenen Entnahmedauer vorliegt und/oder wenn anhand einer Volumenstrommessung und/oder Volumenstromvorgabe eine entsprechende Überschreitung vorliegt oder vorhergesagt wird. Weiterhin kann eine entsprechende Steuerung und/oder Konfiguration auch mittels einer App oder dergleichen vorgenommen werden. Der Wert der Volumenstromvorgabe kann in der Steuereinrichtung 9 gespeichert sein. Zur Berechnung können hier die Leitungslänge von der zentralen Warmwasserbereitstellung 3, also beispielsweise einer Zentralheizung, und deren Durchmesser herangezogen werden. Diese Volumenstromvorgabe kann beispielsweise von einem Monteur - wie bereits erwähnt - mittels einer App, einer entsprechenden Aktivierungstaste, insbesondere durch mehrfaches Drücken, mittels eines Einstellrads oder mittels Direkteingabe auf einem berührungsempfindlichen Bildschirm, einem Taster oder Ähnliches eingestellt werden. Ein Nutzer des Sanitärarmatursystems kann dann beispielsweise anhand der Vorgaben noch auswählen, ob
- ein Haus oder eine Wohnung vorliegt, ob
- ein Warmwasserspeicher oder eine Kombitherme vorliegt, wo sich
- die Position der Warmwasserbereitstellungseinrichtung befindet, insbesondere durch Angabe des Etagenabstands zwischen der Warmwasserbereitstellungseinrichtung und der Entnahmestelle, wie groß
- der ungefähre Abstand der Entnahmestelle zur Warmwasserbereitstellungseinrichtung ist, und/oder wie hoch
- die Warmwassertemperatur der Warmwasserbereitstellungseinrichtung sein soll.

Mittels der Aktivierungseinrichtung 12 ist es ebenfalls möglich, Heißwasser erst bei Bedarf durch den Nutzer bereitzustellen. Das im Boiler 4 befindliche warme Wasser wird dann erst bei Notwendigkeit wieder auf eine vorgebbare Temperatur erhitzt. Mit anderen Worten erfolgt eine aktive Auslösung der Aufheizphase in dem Boiler 4 beispielsweise durch Tastendruck.

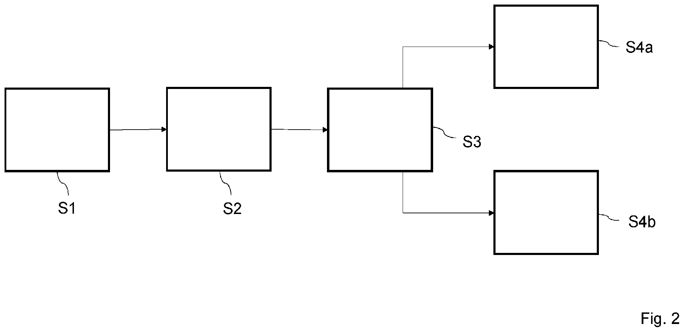

Figur 2 zeigt Schritte eines Verfahrens gemäß einer Ausführungsform der vorliegenden Erfindung.

In Figur 2 sind Schritte eines Verfahrens zur Bereitstellung eines Fluids, insbesondere von Wasser, gezeigt. Das Verfahren umfasst dabei die folgenden Schritte:
- Bereitstellen S1 von Warmfluid mittels einer zentralen Warmfluidbereitstellungseinrichtung, vorzugsweise umfassend eine Zentralheizung,
- Bereitstellen S2 von Kaltfluid mittels einer Kaltfluidbereitstellungseinrichtung zur Bereitstellung von Kaltfluid,
- Bereitstellen S3 von Heißfluid mittels einer lokalen Heißfluidbereitstellungseinrichtung,
dadurch, dass
unterhalb einer vorgebbaren Warmfluidausgabemenge und/oder unterhalb einer Temperatur an zumindest einer Stelle einer Warmfluidzuführleitung von der Warmfluidbereitstellungseinrichtung zu einem Auslass, das Warmfluid durch Zumischen von Heißfluid bereitgestellt wird S4a, und oberhalb der vorgebbaren Warmfluidausgabemenge und/oder Temperatur an zumindest einer Stelle einer Warmfluidzuführleitung, das Warmfluid durch die zentrale Warmfluidbereitstellungseinrichtung bereitgestellt wird S4b.

Zusammenfassend weist zumindest eine der Ausführungsformen der Erfindung zumindest einen der folgenden Vorteile auf und/oder stellt zumindest eines der folgenden Merkmale bereit:
- Einfache, kostengünstige Herstellung.
- Energieeinsparung bei der Bereitstellung von Warmwasser.
- Einsparung von Wasser bei der Warmwassernutzung.
- Höhere Nutzerzufriedenheit.
- Komforterhöhung durch umgehende Warmwasserbereitstellung

### Bezugszeichenliste

- 1: Sanitärarmatursystem
- 2: Kaltwasserleitung
- 3: Warmwasserspeicher
- 4: Heißwasserspeicher/Boiler
- 5: Grundkörper
- 5a: Bedienhebel Mischwasser
- 5b: Mischeinrichtung
- 6: Auslauf
- 6a: Auslass
- 7: Schaltventil
- 8: Schaltventil
- 9: Steuereinrichtung
- 10: Temperatursensor
- 11: Temperatursensor
- 12: Aktivierungseinrichtung

- 20: Bereitstellungseinrichtung
- 21: Sanitärarmatur
- 23: Leitung
- 25: Steuerschnittstelle

- 234: Leitung

- S1-S4a: Schritte eines Verfahrens

## Patentansprüche

1. Vorrichtung zur Bereitstellung eines Fluids, insbesondere von Wasser, umfassend
eine zentrale Warmfluidbereitstellungseinrichtung (3), vorzugsweise umfassend eine Zentralheizung, zur Bereitstellung von Warmfluid,
eine Kaltfluidbereitstellungseinrichtung (2) zur Bereitstellung von Kaltfluid,
eine lokale Heißfluidbereitstellungseinrichtung (4),
**dadurch gekennzeichnet, dass**
eine Steuereinrichtung (9) angeordnet ist, die zur Steuerung der Einrichtungen (2, 3, 4) ausgebildet ist, derart, dass unterhalb einer Warmfluidausgabemenge und/oder unterhalb einer Temperatur an zumindest einer Stelle einer Warmfluidzuführleitung von der Warmfluidbereitstellungseinrichtung (4) zu einem Auslass (6a), das Warmfluid durch Zumischen von Heißfluid bereitgestellt wird, und oberhalb der vorgebbaren Warmfluidzapfmenge und/oder Temperatur an zumindest einer Stelle einer Warmfluidzuführleitung, das Warmfluid durch die zentrale Warmfluidbereitstellungseinrichtung (3) bereitgestellt wird.

2. Vorrichtung gemäß Anspruch 1, **dadurch gekennzeichnet, dass** mittels einer Einstelleinrichtung (5b, 12) eine gewünschte Warmfluidmenge einstellbar ist, wobei die Steuereinrichtung (9) ausgebildet ist, zu überprüfen, ob die gewünschte Warmfluidmenge größer oder kleiner als die vorgebbare Warmfluidausgabemenge ist.

3. Vorrichtung gemäß Anspruch 2, **dadurch gekennzeichnet, dass** die Einstelleinrichtung (5b, 12) ein mechanisches Bedienelement (5a), ein optisches Erfassungselement und/oder eine Funkschnittstelle zur Einstellung der gewünschten Warmfluidmenge aufweist.

4. Vorrichtung gemäß Anspruch 2 oder 3, **dadurch gekennzeichnet, dass** die Steuereinrichtung (9) und/oder die Einstelleinrichtung (5b, 12) eine Recheneinrichtung aufweist, die anhand einer Zapfdauer, eines gemessenen Wertes eines Fluidvolumenstroms und/oder eines vorgebbaren Wertes des Fluidvolumenstroms eine Warmfluidausgabemenge berechnet.

5. Vorrichtung gemäß einem der Ansprüche 1-4, **dadurch gekennzeichnet, dass** zumindest ein Temperatursensor (10, 11) zur Messung der Temperatur an zumindest einer Stelle stromabwärts der Warmfluidbereitstellungseinrichtung angeordnet ist.

6. Vorrichtung gemäß einem der Ansprüche 1-5, **dadurch gekennzeichnet, dass** Warmfluidzuführleitung und Heißfluidzuführleitung über zumindest ein schaltbares Ventil (7, 8) miteinander verbindbar sind.

7. Vorrichtung gemäß einem der Ansprüche 1-6, **dadurch gekennzeichnet, dass** die Einstelleinrichtung (5b) eine Nutzerschnittstelle (12) zur Betätigung der Heizung der Heißfluidbereitstellungseinrichtung aufweist.

8. Verfahren zur Bereitstellung eines Fluids, insbesondere von Wasser, umfassend die Schritte:
- Bereitstellen (S1) von Warmfluid mittels einer zentralen Warmfluidbereitstellungseinrichtung (3), vorzugsweise umfassend eine Zentralheizung,
- Bereitstellen (S2) von Kaltfluid mittels einer Kaltfluidbereitstellungseinrichtung (2) zur Bereitstellung von Kaltfluid,
- Bereitstellen (S3) von Heißfluid mittels einer lokalen Heißfluidbereitstellungseinrichtung (4),
**dadurch gekennzeichnet, dass**
unterhalb einer vorgebbaren Warmfluidausgabemenge und/oder unterhalb einer Temperatur an zumindest einer Stelle einer Warmfluidzuführleitung von der Warmfluidbereitstellungseinrichtung (3) zu einem Auslass (6a), das Warmfluid durch Zumischen von Heißfluid bereitgestellt wird (S4a), und oberhalb der vorgebbaren Warmfluidausgabemenge und/oder Temperatur an zumindest einer Stelle einer Warmfluidzuführleitung, das Warmfluid durch die zentrale Warmfluidbereitstellungseinrichtung (3) bereitgestellt wird (S4b).

9. Verfahren gemäß Anspruch 8, **dadurch gekennzeichnet, dass** die vorgebbare Warmfluidausgabemenge mittels einer Nutzerschnittstelle (12) eingestellt wird und eine Ausgabe des Fluids initiiert wird.

10. Verfahren gemäß Anspruch 8 oder 9, **dadurch gekennzeichnet, dass** eine Heizeinrichtung für die Heißfluidbereitstellungseinrichtung (4) mittels einer Nutzerschnittstelle (12) betätigt wird.

11. Verfahren gemäß einem der Ansprüche 8-10, **dadurch gekennzeichnet, dass** eine Warmfluidentnahmemenge anhand einer ermittelten Größe eines Volumenstroms des ausgegebenen Fluids und/oder von Vorgaben für den Volumenstrom und/oder anhand einer Entnahmedauer des ausgegebenen Fluids berechnet wird, diese mit der vorgebbaren Warmfluidausgabemenge verglichen wird und entsprechend dem Vergleich das Warmfluid ausgegeben wird.

12. Sanitärarmatursystem (1), umfassend
eine Vorrichtung (1) zur Bereitstellung eines Fluids gemäß einem der Ansprüche 1-7, und
eine Sanitärarmatur (21), die mit der Vorrichtung zur Bereitstellung des Fluids fluidisch verbunden ist.

## Claims

1. Apparatus for providing a fluid, in particular water, comprising
a central warm fluid provision device (3), preferably comprising a central heating unit, for providing warm fluid,
a cold fluid provision device (2) for providing cold fluid,
a local hot fluid provision device (4),
**characterised in that**
there is arranged a control device (9) which is constructed to control the devices (2, 3, 4) in such a manner that, below a warm fluid discharge quantity and/or below a temperature at least at one location of a warm fluid supply line from the warm fluid provision device (4) to an outlet (6a), the warm fluid is provided by mixing hot fluid and, above the predeterminable warm fluid tapping quantity and/or temperature at least at one location of a warm fluid supply line, the warm fluid is provided by the central warm fluid provision device (3).

2. Apparatus according to claim 1, **characterised in that** by means of an adjustment device (5b, 12) a desired warm fluid quantity can be adjusted, wherein the control device (9) is constructed to check whether the desired warm fluid quantity is greater or smaller than the predeterminable warm fluid discharge quantity.

3. Apparatus according to claim 2, **characterised in that** the adjustment device (5b, 12) has a mechanical operating element (5a), an optical detection element and/or a radio interface for adjusting the desired warm fluid quantity.

4. Apparatus according to claim 2 or 3, **characterised in that** the control device (9) and/or the adjustment device (5b, 12) has a processor device which calculates a warm fluid discharge quantity with reference to a tapping duration, a measured value of a fluid volume flow and/or a predeterminable value of the fluid volume flow.

5. Apparatus according to any one of claims 1 to 4, **characterised in that** at least one temperature sensor (10, 11) is arranged for measuring the temperature at least at one location downstream of the warm fluid provision device.

6. Apparatus according to any one of claims 1 to 5, **characterised in that** the warm fluid supply line and hot fluid supply line can be connected to each other via at least one switchable valve (7, 8).

7. Apparatus according to any one of claims 1 to 6, **characterised in that** the adjustment device (5b) has a user interface (12) for activating the heating of the hot fluid provision device.

8. Method for providing a fluid, in particular water, comprising the steps of:
- providing (S1) warm fluid by means of a central warm fluid provision device (3), preferably comprising a central heating unit,
- providing (S2) cold fluid by means of a cold fluid provision device (2) for providing cold fluid,
- providing (S3) hot fluid by means of a local hot fluid provision device (4),
**characterised in that**,
below a warm fluid discharge quantity and/or below a temperature at least at one location of a warm fluid supply line from the warm fluid provision device (3) to an outlet (6a), the warm fluid is provided by mixing hot fluid (S4a) and, above the predeterminable warm fluid discharge quantity and/or temperature at least at one location of a warm fluid supply line, the warm fluid is provided (S4b) by the central warm fluid provision device (3).

9. Method according to claim 8, **characterised in that** the predeterminable warm fluid discharge quantity is adjusted by means of a user interface (12) and discharge of the fluid is initiated.

10. Method according to claim 8 or 9, **characterised in that** a heating device for the hot fluid provision device (4) is activated by means of a user interface (12).

11. Method according to any one of claims 8 to 10, **characterised in that** a warm fluid removal quantity is calculated with reference to an established size of a volume flow of the discharged fluid and/or specifications for the volume flow and/or with reference to a removable duration of the discharged fluid, this quantity is compared with the predeterminable warm fluid discharge quantity and the warm fluid is discharged in accordance with the comparison.

12. Sanitary fitting system (1), comprising
an apparatus (1) for providing a fluid according to any one of claims 1 to 7, and
a sanitary fitting (21) which is fluidically connected to the apparatus for providing the fluid.

## Revendications

1. Dispositif pour la fourniture d'un fluide, en particulier de l'eau, comprenant:
une installation centrale de fourniture de fluide chaud (3), comprenant de preference un chauffage central, pour la fourniture de fluide chaud;
une installation de fourniture de fluide froid (2) pour la fourniture d'un fluide froid;
une installation locale de fourniture de fluide très chaud (4);
**caractérisé en ce que**:
un dispositif de commande (9) est prévu, qui est configuré pour commander les installations (2, 3, 4) de sorte que, en dessous d'une quantité de sortie de fluide chaud et/ou en dessous d'une température à au moins un point d'une conduite d'alimentation en fluide chaud depuis l'installation de fourniture de fluide chaud (4) vers une sortie (6a), le fluide chaud est fourni par mélange avec du fluide très chaud et, au-delà de la quantité de prélèvement de fluide chaud prédéterminable et/ou de la température à au moins un point d'une conduite d'alimentation en fluide chaud, le fluide chaud est fourni par l'installation centrale de fourniture de fluide chaud (3).

2. Dispositif selon la revendication 1, **caractérisé en ce qu'**une quantité de fluide chaud souhaitée peut être réglée au moyen d'un dispositif de réglage (5b, 12), le dispositif de commande (9) étant conçu pour vérifier si la quantité de fluide chaud souhaitée est supérieure ou inférieure à la quantité de sortie de fluide chaud prédéterminable.

3. Dispositif selon la revendication 2, **caractérisé en ce que** le dispositif de réglage (5b, 12) comprend un élément de commande mécanique (5a), un élément de détection optique et/ou une interface radio pour le réglage de la quantité de fluide chaud souhaitée.

4. Dispositif selon la revendication 2 ou 3, **caractérisé en ce que** le dispositif de commande (9) et/ou le dispositif de réglage (5b, 12) comprend un dispositif de calcul qui calcule une quantité de sortie de fluide chaud à l'aide d'une durée de prélèvement, d'une valeur mesurée d'un débit volumique de fluide et/ou d'une valeur prédéterminable du débit volumique de fluide.

5. Dispositif selon l'une des revendications 1 à 4, **caractérisé en ce qu'**au moins un capteur de température (10, 11) est prévu pour mesurer la température à au moins un point en aval de l'installation de fourniture de fluide chaud.

6. Dispositif selon l'une des revendications 1 à 5, **caractérisé en ce que** la conduite d'alimentation en fluide chaud et la conduite d'alimentation en fluide très chaud peuvent être reliées entre elles par l'intermédiaire d'au moins une vanne commutable (7, 8).

7. Dispositif selon l'une des revendications 1 à 6, **caractérisé en ce que** le dispositif de réglage (5b) comprend une interface utilisateur (12) pour l'actionnement du chauffage de l'installation de fourniture de fluide très chaud.

8. Procédé pour la fourniture d'un fluide, en particulier de l'eau, comprenant les étapes suivantes:
- fourniture (S1) d'un fluide chaud au moyen d'une installation centrale de fourniture de fluide chaud (3), comprenant de préférence un chauffage central ;
- fourniture (S2) d'un fluide froid au moyen d'une installation de fourniture de fluide froid (2) pour la fourniture de fluide froid ;
- fourniture (S3) d'un fluide très chaud au moyen d'une installation locale de fourniture de fluide très chaud (4) ;
**caractérisé en ce que** :
en dessous d'une quantité de sortie de fluide chaud prédéterminable et/ou en dessous d'une température à au moins un point d'une conduite d'alimentation en fluide chaud depuis l'installation de fourniture de fluide chaud (3) vers une sortie (6a), le fluide chaud est fourni par mélange avec du fluide très chaud (S4a) et, au-delà de la quantité de sortie de fluide chaud prédéterminable et/ou de la température à au moins un point d'une conduite d'alimentation en fluide chaud, le fluide chaud est fourni par l'installation centrale de fourniture de fluide chaud (3) (S4b).

9. Procédé selon la revendication 8, **caractérisé en ce que** la quantité de sortie de fluide chaud prédéterminable est réglée au moyen d'une interface utilisateur (12) et qu'une sortie du fluide est initiée.

10. Procédé selon la revendication 8 ou 9, **caractérisé en ce qu'**un dispositif de chauffage pour l'installation de fourniture de fluide très chaud (4) est actionné au moyen d'une interface utilisateur (12).

11. Procédé selon l'une des revendications 8 à 10, **caractérisé en ce qu'**une quantité de prélèvement de fluide chaud est calculée sur la base d'une valeur déterminée d'un debit volumique du fluide sorti et/ou de spécifications pour le débit volumique et/ou sur la base d'une durée de prélèvement du fluide sorti, cette quantité est comparée à la quantité de sortie de fluide chaud prédéterminable, et le fluide chaud est fourni en fonction de la comparaison.

12. Système d'armature sanitaire (1), comprenant:
un dispositif (1) pour la fourniture d'un fluide selon l'une des revendications 1 à 7,
et
une armature sanitaire (21), qui est connectée de manière fluidique au dispositif de fourniture du fluide.
